# EUROPEAN PATENT APPLICATION

(11) **EP 3 974 809 A1**
(43) Date of publication of application: **30.03.2022**
(21) Application number: 20198949.8
(22) Date of filing: 29.09.2020
(51) Int. Cl.: G01N 21/03

(54) **MICROCUVETTE**

(71) Applicant: Bioanalyt GmbH, 14513 Teltow (DE)
(72) Inventor: SCHWEIGERT, Florian, 12205 Berlin (DE)
(74) Representative: Patentanwälte Ruff, Wilhelm, Beier, Dauster & Partner mbB

(57) **Abstract**

The invention discloses a microcuvette for the optical analysis of parameters in biological fluids, in particular in blood. The microcuvette includes a basic body having at least one recess or cavity, wherein said recess or cavity comprises at least one measuring section with two opposite, essentially planar surfaces. These surfaces are arranged preferably substantially parallel to each other at a distance a.

According to the invention,
- the surfaces of the measuring section have dimensions of at least 4 mm in both surface directions x and y,
- the surfaces, preferably the whole microcuvette, are made from polymer material which has a transmittance of at least 40%, preferably of at least 50% for electromagnetic radiation with wavelengths between 400 nm and 650 nm, and
- distance a is between 0.01 mm and 0.8 mm.

## Description

This invention is related to a microcuvette for the optical analysis of parameters in biological fluids, in particular in blood.

Cuvettes are well-known to be small containers, normally in the form of a cube, and made from an at least partly transparent material such as plastic or glass. Cuvettes are used to hold samples or probes, often biological fluids, for optical analysis or so-called spectroscopic measurement. Usually light from a light source is passed through the sample within the cuvette and e.g. the resulting absorbance, transmittance or fluorescence is measured. These measurements are normally done with a so-called spectrometer or spectrophotometer.

If the cuvette is (very) small and holds only a small volume of the (liquid) sample, it is called a "microcuvette". There are microcuvettes which can hold volumes in the range of nanoliters and others which can hold sample values in the range of microliters, depending on their application.

Usually a liquid sample is (automatically) drawn via capillary forces in a precise amount into a recess or cavity within the microcuvette, as soon as the opening or tip of the microcuvette touches a drop of the sample. The microcuvette holding the sample is then placed in the corresponding optical analyzer for making the corresponding measurement.

Examples of biological fluids which are analyzed by optical methods using cuvettes or microcuvettes are saliva, urine, milk and especially blood. Referring to blood as a biological fluid, the parameters of whole blood (untreated or treated), of blood serum or blood plasma can be determined. All biological fluids, including blood, can come from humans or animals.

A cuvette for sampling a fluid, mixing the sample with a reagent and making an optical analysis on this mixture is disclosed in US-patent 4,088,448. The cuvette according to this publication includes a cavity which is defined by two planar surfaces which are placed or can be placed at a predetermined distance from each other. The corresponding sample is drawn into the cavity preferably by capillary force.

US-patent 5,674,457 describes a capillary microcuvette comprising a body member and a cavity including a measuring zone within the body member. Also with this publication the cavity is defined by two opposite, substantially parallel inner surfaces of the body member. It further includes an outer peripheral edge comprising a sample inlet and an inner peripheral zone having a channel of higher capillary force than the measuring zone. The design of the microcuvette according to US-patent 5,674,457 should prevent the occurrence of air bubbles within the measuring zone.

In EP-A2-2745779 a capillary microcuvette is disclosed which should allow a direct loading of the sample from the sample source, e.g. a fingertip, to the microcuvette or which should provide a more convenient introduction of the sample using micropipettes. In this context, a specific design of the cavity which holds the sample is proposed.

A further design for a microcuvette is disclosed in EP-A1-2876428. A number of slits is provided in a specific design to avoid that air bubbles are developed in an optical measuring slit for preventing the bubbles from affecting measurement results.

None of the above-mentioned publications raises the question of what size the measuring zone should have for making the corresponding optical analysis, and from which material this measuring zone is made for making the corresponding optical analysis. The focus of these publications is on the handling of small sample volumes, on the fluidics of the sample, or on the precision of the optical measurement.

It is the object of the present invention to avoid the drawbacks of the microcuvettes known from the prior art. In particular, the invention wants to provide a microcuvette which is suitable for determining at least two parameters in a biological fluid sample, in particular in a blood sample, namely together in one measuring process or measuring cycle. Preferably, said parameters should be determined quantitatively, and in particular simultaneously. Preferably, the microcuvette should be designed that a photometric determination and/or a determination with fluorescence spectroscopy of parameters of a sample in the microcuvette is possible.

The above-mentioned objects and other objects are accomplished by the microcuvette with the features of claim 1. Preferred embodiments of the inventive microcuvette are defined in the claims dependent from claim 1.

An inventive use of the inventive microcuvette is defined in claim 15.

The wording of all claims is hereby incorporated into the description by explicit reference.

According to the invention the new microcuvette has a basic body comprising at least one recess or cavity, wherein said recess or cavity has at least one measuring section with two opposite, essentially planar surfaces which are arranged preferably substantially parallel to each other at a distance a.

Further, the inventive microcuvette has the following features:
- the surfaces of the measuring section have dimensions of at least 4 mm in both surface directions x and y,
- at least said surfaces, preferably the whole microcuvette, are made from polymer material which has a transmittance of at least 40%, preferably of at least 50% for electromagnetic radiation (light) with wavelengths between 400 nm and 650 nm, and
- distance a is between 0.01 mm and 0.8 mm.

The terms mentioned in context with the definition of the inventive microcuvette are defined as follows.

"Biological fluid" is a generic term for any bio-organic fluid produced by an organism. In the context of this invention biological fluids produced by animals and humans are of specific importance. Examples for such biological fluids are blood, blood serum, blood plasma, urine, saliva, interstitial fluid, cytosol, and others like milk.

"Transmittance" is the fraction of incident light which is transmitted. Transmittance can be described to be the amount of light that passes through the corresponding substance and comes out the other side (for a given wavelength).

In context with the inventive microcuvette, as defined above, it has to be emphasized that the actual geometric shape of the surfaces of the measuring section is not restricted by the definition that the two dimensions in surface directions x and y have to be at least 4 mm. E.g. the surfaces of the measuring section do not have to be rectangular, but could be round or oval or have any other two-dimensional geometrical shape. In this context, the corresponding feature of the inventive microcuvette can also be described such that the corresponding surfaces of the measuring section provide at least an area of 16 mm², namely 4 mm x 4 mm, for optical analysis.

It is preferred according to the invention that the polymer material, from which the whole microcuvette or at least the surfaces of the measuring section are made, has a transmittance of at least 40%, preferably of at least 50%, for electromagnetic radiation (light) with wavelengths between 290 nm and 650 nm.

In this context it is even further preferred according to the invention that the polymer material has a transmittance of at least 80% for electromagnetic radiation (light) with wavelengths between 290 nm and 650 nm, wherein preferably the polymer material has a transmittance of at least 85% for electromagnetic radiation (light) with wavelengths between 295 nm and 350 nm.

In preferred embodiments of the inventive microcuvette the polymer material can be further characterized by its auto-fluorescence.

In this context, it is known that many polymers and plastics (polymer materials) are fluorescent, particularly when excited with UV radiation (< 400 nm), blue light (400 nm to 500 nm) and green light (500 nm to 550 nm). The corresponding fluorescence can be intrinsic to the bulk polymer, or, in other cases, can be implicated by additives, impurities or degradation products of the polymer material.

As a consequence, for high precision fluorescence measurements, the (auto-)fluorescence properties of polymer materials of a cuvette/microcuvette are critical. The fluorescence of the polymer material excited by the light which is used for the optical analysis, e.g. of parameters in biological fluids, can have a negative impact on the (original) measurement results. Thus, it can be advantageous to use polymer materials with a low auto-fluorescence for optimal detection by fluorescence techniques, including laser induced fluorescence techniques.

Therefore, it is preferred according to the invention that the microcuvette, or at least the surfaces of the measuring section, are made from a polymer material which has an auto-fluorescence in the wavelength range between 550 nm and 630 nm of less than 70% of the auto-fluorescence of neutral glass, when the polymer material is excited with light in the wavelength range between 400 nm and 430 nm.

The term "neutral glass" is used for borosilicate glasses with good chemical resistance. These glasses belong to the glasses of Hydrolytic Class 1 (Type I).

Referring to the surfaces of the measuring section, it is preferred under the invention that these surfaces have dimensions of at least 5 mm in both surface directions x and y. This corresponds to a (surface) area of at least 25 mm², namely 5 mm x 5 mm, which is provided for the optical analysis.

Also referring to the surfaces of the measuring section, it is preferred according to the invention, if these surfaces have a rectangular shape or a trapezoidal shape or form.

For the last mentioned embodiments it is further preferred that the surfaces of the measuring section have dimensions of at least 4 mm and at least 6 mm in the surface directions x and y, respectively. Within the latter embodiments, embodiments are even further preferred, wherein the surfaces of the measuring section have dimensions of 4 mm x 8 mm or of 4 mm x 10 mm in surface directions x and y, respectively.

In accordance with the definitions described above, a person skilled in the art can choose a (transparent) polymer material from which the microcuvette or at least the surfaces of the measuring section are made. One of these polymer materials is PMMA (polymethylmethacrylate), also known as acrylic glass. Other possible candidates as a polymer material used in the production of the inventive microcuvette are transparent grades of polycarbonates (PC).

According to the invention it is preferred to use cyclic olefin copolymer (COC) or cyclic olefin polymer (COP) as a polymer material from which the microcuvette or at least the surfaces of the measuring section of the microcuvette are made. In this context the use of cyclic olefin copolymer (COC) is further preferred. Various grades of said COC-polymers are sold under the trademark TOPAS^{®}.

As emphasized above, one of the essential features of the inventive microcuvette is the distance of the two surfaces of the measuring section, namely distance a. In this context it is preferred under the invention that distance a is between 0.05 mm and 0.8 mm. Distances a between 0.1 mm and 0.3 mm are even further preferred.

In also preferred embodiments of the inventive microcuvette the walls of the recess or cavity of the basic body, and therefore also the walls of the measuring section with its surfaces, have a wall thickness between 0.2 mm and 1,2 mm, preferably between 0.3 mm and 0.6 mm.

In principle, the recess or cavity in which the sample (biological fluid) will be contained for the optical analysis can have any three-dimensional shape. Nevertheless, it is preferred if the recess or cavity has the shape of a hexahedron, i.e. of any polyhedron with six faces. Within the group of all these hexahedrons cubes are further preferred, i.e. a regular hexahedron with all its faces square. Also further preferred are rectangular cuboids with three pairs of rectangles as faces.

In other preferred embodiments of the inventive microcuvette a further aspect relating to the polymer material from which the microcuvette or at least the surfaces of the measuring section are made, is considered.

Many polymer materials, including those which can preferably be used according to the invention, are hydrophobic in nature. Due to the characteristics of biological fluids, including blood, which are contained in the inventive microcuvette for optical analysis, it can be of advantage to employ techniques for making at least those surfaces of polymer material which come into contact with these biological fluids (more) hydrophilic. Such techniques include plasma surface modification, oxidation of the surface with ultraviolet (UV) light and/or ozone, and UV-grafting. All these techniques including their various modifications are known to the person skilled in the art.

In this context plasma surface modification can be a preferred technique as it is e.g. fast and uses no hazardous chemicals. Also it only affects the properties of the surface of the polymer material, and not the properties of the bulk material. During the treatment process, the physical-chemical nature of the surface of the polymer material is changed by various mechanisms including oxidation, degradation, and cross-linking.

This described phenomenon can also be summarized under the catchword "wettability". This is the ability of a liquid (here: biological liquid) to establish and maintain contact with a solid surface (here: (inner) surface of the microcuvette). The above-mentioned techniques are for improving the wettability of the surfaces of the microcuvette.

As a consequence, it is preferred according to the present invention that the polymer material, in particular the polymer material forming the inner surfaces of the recess or cavity and/or the measuring section, is physically or chemically treated for increasing the hydrophilicity of the polymer material.

The above-mentioned techniques for said surface modification will be preferably applied to the microcuvette, in particular its (inner) surfaces, after its production.

According to other preferred embodiments of the inventive microcuvettes the recess or cavity comprises at least one electrically conductive electrode, in particular at least two electrically conductive electrodes. The corresponding electrodes can be helpful in analyzing further parameters of the biological fluid, in particular in blood. Said electrodes can be e.g. useful in determining the number of cells in a blood volume, to determine blood sedimentation in a blood volume or to determine the stability of blood cells towards rupture of the cell membrane .

In order not to affect other measurements in the cuvette, in particular optical measurements, it is advantageous to use transparent electrodes in these additional preferred embodiments of the inventive microcuvette.

In the last mentioned embodiments it is preferred that the at least one electrode is attached to a wall of the recess or cavity, or it is integrated into the wall of the recess or cavity.

In other preferred embodiments of the inventive microcuvette with electrodes, it is further preferred that at least one pair of electrodes is attached to two walls of the recess or cavity, or is integrated into two walls of the recess or cavity. In these last mentioned embodiments the two walls preferably are opposite to each other on the recess or cavity, in particular on the recess or cavity of hexahedron shape.

Finally, the invention further comprises the use of the inventive microcuvette as defined and described above, in the preferably simultaneous optical determination of at least two parameters in biological fluids, in particular in blood, preferably in the simultaneous optical determination of hemoglobin (Hb) and zinc protoporphyrin (ZPP).

"Hemoglobin (Hb)" is a metalloprotein in the red blood cells (erythrocytes) which contains iron and is responsible for the oxygen transport in almost all vertebrates.

"Zinc protoporphyrin" (ZPP) is a compound found in red blood cells, if the generation of hemoglobin is inhibited by lead and/or by lack of iron. ZPP is an established indicator for iron deficiency, estimated to cause more than 50% of anemia cases.

Hemoglobin (Hb) is preferably optically analyzed by photometric determination (spectrometric analysis). Photometric determination is the determination (qualitatively or quantitatively) of substances by measuring their capacity to absorb light of various wavelengths.

Zinc protoporphyrin (ZPP) is preferably optically analyzed by fluorescence measurement (fluorescence spectroscopy). Fluorescence measurement is the (qualitative or quantitative) determination of substances including fluorophore molecules by exciting those molecules and by measuring the emitted fluorescence.

The advantages of the inventive microcuvette and of its use are evident from the above disclosure.

The inventive microcuvette provides a comparably large area for the optical analysis of parameters in biological fluids. Further, the microcuvette is made from specific polymer materials allowing not only one optical measurement, but at least two optical measurements of the same parameter, or of different parameters.

Further advantages and features of the invention will become clear from the following description of the drawings in conjunction with the dependent claims. The individual features can be realized either singly or in combination in one embodiment of the invention. The drawings merely serve for illustration and better understanding of the invention and are not to be understood as in any way limiting the invention.

The figures show:
- Fig. 1: a top view of an inventive microcuvette according to the invention, and
- Fig. 2: a sectional view of the microcuvette according to fig. 1 along the plane A-A.

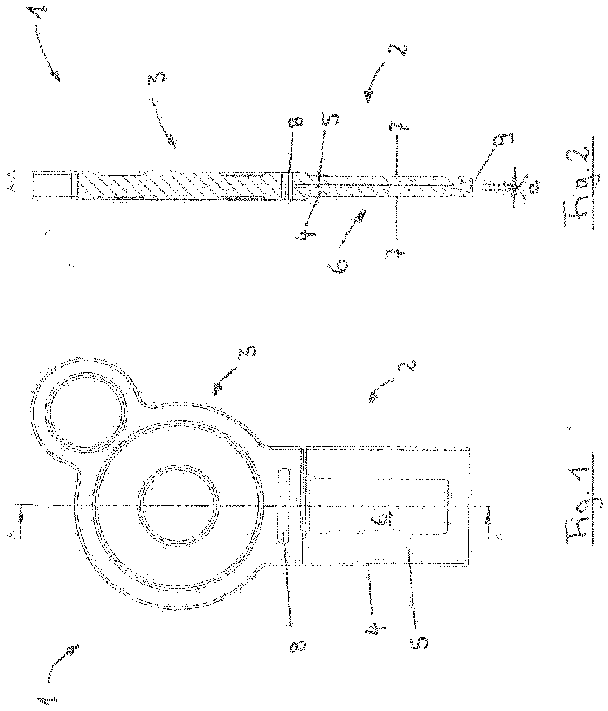

Fig. 1 shows an inventive microcuvette 1 with two sections 2 and 3. Section 3 includes only features for the better handling of microcuvette 1, and therefore is not relevant for the function of microcuvette 1 during optical analysis of parameters in biological fluids. As a consequence, in the following only functional part 2 of microcuvette 1 will be discussed.

As it can be seen from Fig. 1, microcuvette 1 includes a basic body 4 comprising a recess or cavity 5 for housing the biological fluid as a sample for optical analysis.

At said recess or cavity 5 there is a measuring section 6 for the optical analysis of the corresponding parameters. According to Fig. 1 this measuring section 6 has a rectangular shape. In a preferred embodiment this measuring section 6 has dimensions of 4 mm x 10 mm.

Recess or cavity 5 is within basic body 4. At the bottom of said recess/cavity 5, there is an inlet opening at the bottom (which will be explained with respect to Fig. 2), and an aeration opening 8 at the top for kind of pressure compensation if the microcuvette is filled with the biological fluid from the bottom.

Fig. 2 is a sectional view along the plane A-A of Fig. 1.

Again, microcuvette 1 is shown with the two sections 2 and 3. And again, only functional section 2 is relevant for the function of the microcuvette 1 in optical analysis.

As shown in Fig. 2, basic body 4 includes recess or cavity 5 which houses the biological fluid to be optically analyzed, in particular the blood sample. At its top recess/cavity 5 is connected to aeration opening 8, and on its bottom recess/cavity 5 ends in an inlet opening 9. Through this opening 9 the biological fluid is brought into recess/cavity 5 via capillary forces.

Further, measuring section 6 is shown in Fig. 2 with the two surfaces 7. Surfaces 7 are planar, and are arranged preferably (but not necessarily) substantially parallel to each other at a distance a.

Measuring section 6 with its two surfaces 7 makes optical analysis via microcuvette 1 possible. Preferably, the possibility for photometric measurements and fluorescence measurements with microcuvette 1 is provided.

As microcuvette 1 is designed for small volumes of a sample, e.g. volumes between 5 µL and 100 µL, preferably between 5 µL and 30 µL, distance a in microcuvette 1 preferably is between 0.1 mm and 0.3 mm.

## Claims

1. Microcuvette (1) for the optical analysis of parameters in biological fluids, in particular in blood, with a basic body (4) comprising at least one recess or cavity (5), said recess or cavity (5) having at least one measuring section (6) with two opposite, essentially planar surfaces (7) which are arranged preferably substantially parallel to each other at a distance a,
wherein
• the surfaces (7) of the measuring section (6) have dimensions of at least 4 mm in both surface directions x and y,
• at least said surfaces (7), preferably the whole microcuvette (1), are made from polymer material which has a transmittance of at least 40%, preferably of at least 50% for electromagnetic radiation with wavelengths between 400 nm and 650 nm, and
• distance a is between 0.01 mm and 0.8 mm.

2. Microcuvette according to claim 1, **characterized in that** the polymer material has a transmittance of at least 40 %, preferably of at least 50 % for electromagnetic radiation with wavelengths between 290 nm and 650 nm.

3. Microcuvette according to claim 1 or claim 2, **characterized in that** the polymer material has a transmittance of at least 80% for electromagnetic radiation with wavelengths between 290 nm and 650 nm, wherein the polymer material preferably has a transmittance of at least 85 % for electromagnetic radiation with wavelengths between 295 nm and 350 nm.

4. Microcuvette according to anyone of the preceding claims, **characterized in that** the polymer material has an auto-fluorescence in the wavelength range between 550 nm and 630 nm of less than 70 % of the auto-fluorescence of neutral glass, when excited with light in the wavelength range between 400 nm and 430 nm.

5. Microcuvette according to anyone of the preceding claims, **characterized in that** the surfaces (7) of the measuring section (6) have dimensions of at least 5 mm in both surface directions x and y.

6. Microcuvette according to anyone of the preceding claims, **characterized in that** the surfaces (7) of the measuring section (6) have a rectangular shape or a trapezoidal shape.

7. Microcuvette according to claim 6, **characterized in that** the surfaces (7) of the measuring (6) section have dimensions of at least 4 mm and at least 6mm in the surface directions x and y, respectively, wherein preferably the surfaces (7) of the measuring section (6) have dimensions of 4 mm x 8 mm or of 4 mm x 10 mm in surface directions x and y, respectively.

8. Microcuvette according to anyone of the preceding claims, **characterized in that** the polymer material is at least one cyclic olefin copolymer (COC) or at least one cyclic olefin polymer (COP).

9. Microcuvette according to anyone of the preceding claims, **characterized in that** distance a is between 0.05 mm and 0.8 mm, more preferably between 0.1 mm and 0.3 mm.

10. Microcuvette according to anyone of the preceding claims, **characterized in that** the recess or cavity (5) has the shape of a hexahedron.

11. Microcuvette according to anyone of the preceding claims, **characterized in that** the polymer material, in particular the polymer material forming the inner surfaces of the recess or cavity and/or the measuring section, is physically or chemically treated for increasing the hydrophilicity of the polymer material.

12. Microcuvette according to anyone of the preceding claims, **characterized in that** the recess or cavity comprises at least one electrically conductive electrode, in particular at least two electrically conductive electrodes.

13. Microcuvette according to claim 12, **characterized in that** the at least one electrode is attached to a wall of the recess or cavity, or is integrated into the wall of the recess or cavity.

14. Microcuvette according to claim 12 or claim 13, **characterized in that** at least one pair of electrodes is attached to two walls of the recess or cavity, or integrated into two walls of the recess or cavity, wherein preferably the two walls are opposite to each other on the recess or cavity, in particular on a recess or cavity of cuboidal shape.

15. Use of a microcuvette according to anyone of the preceding claims, in the preferably simultaneous optical determination of at least two parameters in biological fluids, in particular in blood, preferably in the simultaneous optical determination of hemoglobin (Hb) and zinc protoporphyrin (ZPP).
